# EUROPÄISCHE PATENTANMELDUNG

(11) **EP 1 862 102 A1**
(43) Veröffentlichungstag der Anmeldung: **05.12.2007**
(21) Anmeldenummer: 07007794.6
(22) Anmeldetag: 17.04.2007
(51) Int. Cl.: A47J 47/16

(54) **Halteschiene für Küchenutensilien**

(30) Priorität: 03.06.2006 DE 202006008800 U
(71) Anmelder: NIRO-PLAN AG, 4663 Aarburg (CH)
(72) Erfinder:
(74) Vertreter: Blumenröhr, Dietrich

(57) **Zusammenfassung**

Die Erfindung betrifft eine Schiene (1) zur Halterung von an ihr an- oder eingehängten Utensilien vor einer Wand, wobei die Schiene parallel zur Wand verschiebbar ist.

## Beschreibung

Die Erfindung betrifft eine Schiene zur Halterung von an ihr an- oder eingehängten Utensilien, insbesondere Küchenutensilien vor einer Wand.

Insbesondere in modernen Küchen werden an Wänden oder unter Küchenoberschränken häufig Schienen als so genannte "Reling-Systeme" verwandt, um Küchenutensilien der unterschiedlichsten Art wie Kochlöffel, Schneebesen etc. aufzuhängen. Auch in Bädern oder Hausarbeitsräumen etc. finden sich entsprechende Systeme.

Reling-Systeme dieser Art wurden dann weiterentwickelt, dahingehend, dass z.B. in Küchen über sie auch Tablare, Siebe, Schüsseln oder Töpfe etc. in einer im Wesentlichen horizontalen Ausrichtung gehalten werden können. Dies ermöglicht es z.B. einem Koch oder einer Köchin, oberhalb einer Arbeitsfläche verschiedene Zutaten für ein Gericht, ein Gebäck o. ä. vorbereitet in den genannten Gefäßen etc. bereitzuhalten, um dann den eigentlichen Zubereitungsvorgang zügig auf den Arbeitsflächenbereich unter bzw. vor der Schiene durchführen zu können. Die Arbeitsfläche wird dabei von den vorbereiteten Zutaten freigehalten, da sie in den Gefäßen oberhalb der Arbeitsfläche gehalten sind.

Jetzt ist es in Küchen grundsätzlich erwünscht, eine hohe Hygiene zu haben. Schienen bzw. Relingsysteme der beschriebenen Art haben dabei den Nachteil, dass die in ihnen eingeformten Nuten zur Halterung der Tablare, Siebe, Schüsseln etc. verschmutzen können und dann schlecht zu reinigen sind. Die Verschmutzung ist besonders ein Problem z. B. beim Anbraten von Fleisch, bei dem Wrasen und Fettspritzer sich in den genannten Nuten absetzen können, wenn diese nahe dem Herd angebracht sind, was bei kleinen Küchengrundrissen häufig der Fall ist.

Aufgabe der vorliegenden Erfindung ist es somit, eine Schiene der oben beschriebenen Art dahingehend weiterzubilden, dass die angesprochenen hygienischen Anforderungen leichter zu erfüllen sind.

Diese Aufgabe wird erfindungsgemäß dadurch gelöst, dass die Schiene parallel zu der Wand, vor der an ihr Utensilien wie z.B. Küchenutensilien an- oder eingehängt werden, verschiebbar ist.

Die Erfindung hat damit den Vorteil, dass die Schiene aus dem Bereich herausbewegbar ist, in dem sie einer größeren Verschmutzungsgefahr ausgesetzt ist. Bei Vorgängen, bei denen ein Spritzen von Fett oder Wrasen zu erwarten sind, kann ein Koch die Schienen leicht "in Sicherheit bringen", während die Schiene bei Nahrungszubereitungsvorgängen, die keine entsprechende Spritzgefahr mit sich bringen, schnell wieder in die gewünschte Position oberhalb der Arbeitsfläche (zurück) zu bringen ist.

Vorzugsweise wird die Schiene hinter eine zur Wand beabstandete Blende geschoben. Eine derartige Blende ist glatt ausführbar und damit leicht zu reinigen. Sie kann auch in unmittelbarer Nähe vorgesehen sein von der Stelle, an der die Schiene zur Halterung von Küchenutensilien vorgesehen sein soll, so dass für die Schiene nur kurze Bewegungen zwischen der eingezogenen, geschützten Position und der hervorgeholten Arbeitsposition vorliegen.

Die Blende selbst kann im Wesentlichen parallel zu der Wand verlaufen. Aus optischen Gesichtspunkten ist aber auch eine leichte Abkippung von der Wand möglich.

Obwohl es auch im Rahmen der Erfindung ist, die Schiene bei ihrer Verschiebung beispielsweise um einen Drehpunkt hinter eine Blende zu verschwenken (sie also aus einer im Wesentlichen horizontalen Ausrichtung in eine vertikale Ausrichtung zu bringen), ist bei einer bevorzugten Ausführungsform vorgesehen, die Verschiebung der Schiene im Wesentlichen horizontal vorzusehen.

Dies hat den Vorteil, dass auch eine nur teilweise verschobene Schiene bereits verwandt werden kann, um (Küchen-) Utensilien an ihr an- oder einzuhängen.

Vorzugsweise kann dabei die Schiene auch beidseits hinter der Blende herausschiebbar sein, was eine höhere Flexibilität bei ihrem Einsatz ermöglicht.

Bei einer besonders bevorzugten Ausführungsform ist die Blende insbesondere als Spritzwand am hinteren Ende eines Herdes oder eines Kochfeldes vorgesehen.

Damit kann an der herausgeschobenen Schiene in einem der oben angesprochenen Behälter oder auf einem Tablar etc. eine für das Kochen eines Gerichtes notwendige Zutat nach ihrer Vorbereitung bis zu ihrer Verwendung bereitgehalten werden.

Beim Anbraten von Fleisch sollte die Schiene dann zwar wie oben diskutiert hinter die Blende eingeschoben sein. Dies ist allerdings relativ unproblematisch, da gerade für scharfes Anbraten, das Spritzen verursacht, im Wesentlichen lediglich Fleisch geeignet ist, das sich beim Anbraten ja bereits in der Pfanne befindet, so dass die Schiene hierfür also nicht benötigt wird.

Damit die Blende leichter gereinigt werden kann, ist sie vorteilhafterweise abnehmbar an einer Führung für die Schiene befestigt, wobei die Führung und damit die Schiene bei abgenommener Blende an der Wand verbleibt.

Hierbei hat es sich als günstig erwiesen, zwischen Blende und Führung Magnete und korrespondierende Haftflächen vorzusehen. Damit wird eine auf Dauer wirksame, gegebenenfalls auch leicht lösbare Halterung realisiert, die gegenüber insbesondere mechanischen Verrastungskonstruktionen eine höhere Verschleißsicherheit und damit Dauerhaftigkeit bewirkt. Um unterschiedliche Abstände zwischen Blende und Führung ausgleichen zu können, werden die Magnete vorzugsweise über Gewinde enthaltende verstellbare Distanzstücke befestigt.

Die Schiene, die an der Führung verschiebbar ist, ist an dieser sowohl mittels einer Kugelführung als auch über eine Gleitschiene gelagert. Durch die Gleitschiene wird erreicht, dass die Kugelführung bei einer Benutzung der Schiene nicht durch Drehmomente belastet wird, die aus dem Anhängen von dann belasteten Tablaren oder von gefüllten Schüsseln etc. resultieren. Man hat hier also eine Funktionsteilung, indem die Kugelführung für die leichte Verschiebbarkeit und die Abstützung der Schiene gegen seitliche Kippmomente zuständig ist, während die Gleitschiene für die Abstützung der Schiene gegen Torsionsmomente da ist.

Weitere Vorteile und Merkmale der Erfindung ergeben sich aus der nachfolgenden Beschreibung eines Ausführungsbeispiels. Dabei zeigt:
- Figur 1: die perspektivische Ansicht einer verschiebbaren Schiene;
- Figur 2: die perspektivische Ansicht einer Schiene gemäß Figur 1 teilweise hinter eine Blende geschoben;
- Figur 3: eine Schiene gemäß Figur 2 vollständig hinter die Blende geschoben.

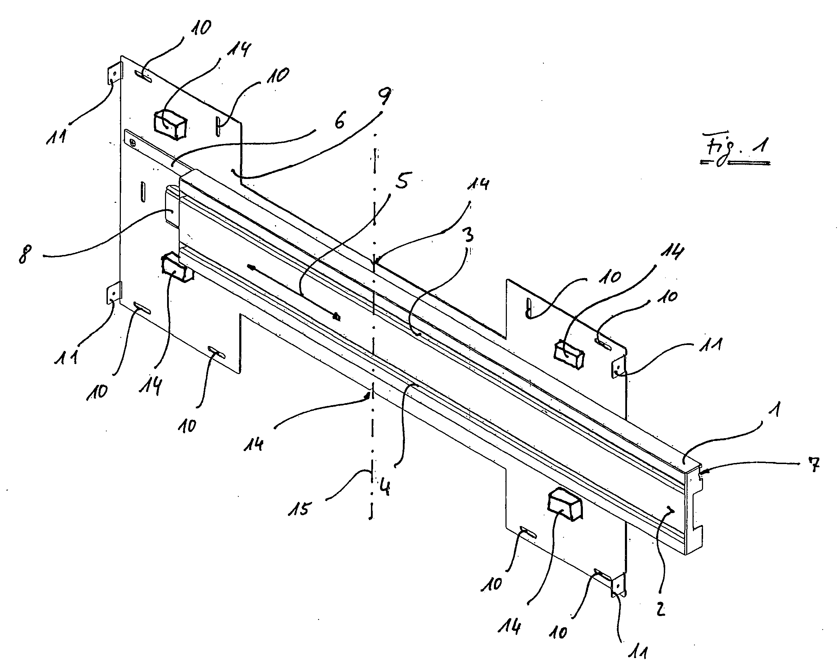

In Figur 1 erkennt man eine Schiene 1, bei der es sich um ein gekantetes Profil aus Edelstahl handelt. Diese Schiene weist auf ihrer Vorderseite 2 eine obere Nut 3 und eine untere Nut 4 auf, in die Tablare, Schüsseln, Töpfe o. ä. mit korrespondierenden Vorsprüngen einhängbar sind. Die Vorsprünge können auch als Griffe für die Tablare oder genannten Behälter genutzt werden.

Es ist auch im Rahmen der Erfindung, wenn die Schiene beispielsweise ein stranggepresstes Aluminiumprofil ist und/oder wenn sie eine oder aber auch mehr als die beschriebenen zwei Nuten aufweist.

Die Schiene 1 ist gemäß dem Pfeil 5 in ihrer Horizontalrichtung verschiebbar. Dabei ist sie einerseits auf einer parallel zu der Verschieberichtung verlaufenden Gleitschiene 6 geführt, die mit einer Führungsnut 7 auf der Rückseite der Schiene 1 korrespondiert. Gleichzeitig wird über eine Kugelführung 8 eine leichte, rollende Beweglichkeit der Schiene 1 bewirkt. Die Gleitschiene 6 und die Kugelführung 8 sind auf einem als Führung ausgebildeten Blech 9 befestigt, über die die hier dargestellte Schiene an einer (nicht dargestellten) Wand zu befestigen ist, wozu entsprechende Schrauben durch an dem Blech 9 vorhandene Langlöcher 10 verlaufen.

Während die Kugelführung 8 auch bei seitlich ausgezogener Schiene 1 diese gegen in der Auszugsebene wirkende Kräfte abstützt, ist die Gleitschiene 6 dazu da, die Schiene 1 im Zusammenwirken mit der Führungsnut 7 gegen Torsionsmomente abzustützen. Diese Torsionsmomente treten auf, wenn in die Nuten 3 oder 4 Elemente eingehängt werden. Diese Torsionsmomente sollen nicht über die Kugelführung abgeleitet werden, die für diese Belastung nicht ausgelegt ist.

Das Blech 9 hat in seinem mittleren Bereich an seiner Ober- und an seiner Unterkante Markierungskerben 14, die auf der Mittellinie 15 des Bleches 9 liegen und bei dessen Montage genutzt werden können, um eine exakt horizontale Ausrichtung der Schiene 1 zu gewährleisten.

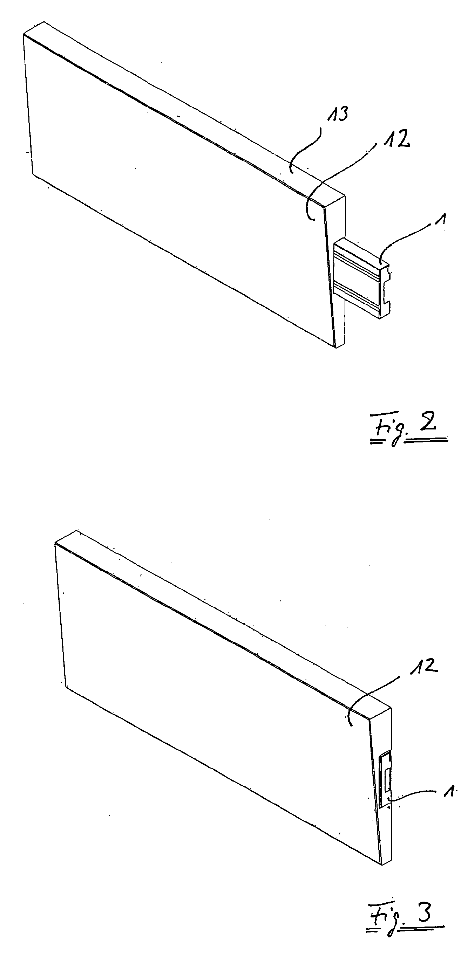

Das Blech 9 ist weiterhin an seinen seitlichen Kanten mit vorgebogenen Laschen 11 versehen. Diese dienen als Führungen für eine in der Figur 2 zu erkennende auf das Blech 9 aufsetzbare Blende 12. Die Blende 12, die insbesondere aus Edelstahl besteht, deckt einerseits das als Führung für die verschiebbare Schiene 1 dienende Blech 9 vollständig ab. Außerdem ist durch den umlaufenden Rand 13 der Blende 12 hinter dieser ein ausreichender Raum vorhanden, in den die Schiene 1 hineingeschoben werden kann. Dadurch kann erreicht werden, dass insbesondere die Nuten 3 und 4 sowie auch die Schiene selbst nicht mehr in einem Fettspritzern und Wrasen ausgesetztem Zustand sind sondern wie in der Figur 3 zu erkennen vollständig von der Blende 12 abgedeckt werden.

In den Figuren 2 und 3 ist es zwar nicht zu erkennen, es soll hier aber dennoch erwähnt werden, dass die Schiene 1 nicht nur in der in den Figuren 2 und 3 nach rechts vorne gerichteten Richtung hinter der Blende 12 herausfahrbar ist, sondern auch in die Richtung nach links hinten.

Die Blende 2 ist im hier dargestellten Beispiel über Magnete 14, die an dem Blech 9 befestigt sind, lösbar mit dem Blech 9 verbunden, so dass die Blende 12 zu Reinigungszwecken leicht zu entfernen ist.

Die Befestigung der Magnete erfolgt dabei über in ihrer Höhe über ein Gewinde verstellbare Halter, so dass unterschiedliche bauseits bedingte Abstände zwischen Blech und Blende ausgeglichen werden können. Des weiteren ist auch möglich, dass die Rückseiten der Magnete auf keilförmigen Haltern angebracht sind, um z.B. eine Neigung der Blende gegenüber dem Blech auszugleichen.

## Patentansprüche

1. Schiene (1) zur Halterung von an ihr an- oder eingehängten Utensilien vor einer Wand,
**dadurch gekennzeichnet,**
**dass** sie parallel zur Wand verschiebbar ist.

2. Schiene gemäß Anspruch 1,
**dadurch gekennzeichnet,**
**dass** sie hinter einer zur Wand beabstandeten Blende (12) verschiebbar ist.

3. Schiene gemäß Anspruch 2,
**dadurch gekennzeichnet,**
**dass** die Verschiebung im Wesentlichen horizontal erfolgt.

4. Schiene gemäß einem oder mehreren der vorhergehenden Ansprüche,
**dadurch gekennzeichnet,**
**dass** die Schiene (1) beidseits hinter der Blende (12) herausschiebbar ist.

5. Schiene gemäß Anspruch 1,
**dadurch gekennzeichnet,**
**dass** die Schiene (1) mittels einer Kugelführung (8) als auch über eine Gleitschiene (6) verschiebbar gelagert ist.

6. Schiene gemäß Anspruch 2,
**dadurch gekennzeichnet,**
**dass** die Blende (12) abnehmbar an einer Führung (9) für die Schiene (1) befestigt ist.

7. Schiene gemäß Anspruch 6,
**dadurch gekennzeichnet,**
**dass** zwischen Blende (12) und Führung (9) Magnete (14) und korrespondierende Haftflächen vorgesehen sind.

8. Schiene gemäß Anspruch 2,
**dadurch gekennzeichnet,**
**dass** die Blende (12) eine Spritzwand eines Herdes bildet.
